Europäisches Patentamt

European Patent Office

Office européen des brevets

(11) Publication number: 0 348 .137
A2

## (12) EUROPEAN PATENT APPLICATION

(21) Application number: 89306199.4

(22) Date of filing: 20.06.89

(51) Int. Cl.⁴: **F24C 7/00** , **G09F 19/12** , **F21P 3/00**

(30) Priority: 22.06.88 GB 8814880

(43) Date of publication of application:
**27.12.89 Bulletin 89/52**

(84) Designated Contracting States:
**DE ES FR GB IT**

(71) Applicant: **THIRD DIMENSION LIMITED**
**4 Wellington Park Estate Waterloo Road**
**London, NW2 7JW(GB)**

(72) Inventor: **Balas, Solomon**
**21 Highview Gardens**
**Edgware Middlesex(GB)**
Inventor: **Dunn, Paul**
**30 Watling Street**
**Radlett Hertfordshire(GB)**

(74) Representative: **Read, Matthew Charles et al**
**Venner Shipley & Co. 368 City Road**
**London EC1V 2QA(GB)**

(54) Optical display apparatus.

(57) An optical display apparatus comprises a non-isotropic holographic diffusing screen (1), a light source (3) for projecting a pattern of light onto the screen, and a reflector (2). The screen has the property of being substantially transparent, except for light from the source (3) which is diffused, diffracted and then reflected back through the screen by the reflector (2). The screen (1) is substantially transparent to the reflected light. The apparatus can be used as a decorative display, for advertising purposes and in a flame effect fire. The pattern of light projected from the source is configured to achieve the desired optical effect.

EP 0 348 137 A2

# OPTICAL DISPLAY APPARATUS

This invention relates to optical display apparatus utilising a non-isotropic diffusing screen and has particular application to displaying a real image for use in advertising displays, flame-effect fires and other uses.

Holographic non-isotropic diffusing screens are known from US-A-3 708 217 and GB 1 579 214 and have been used in small scale optical systems such as microscopes and character recognition devices as an improvement over a conventional ground glass diffusing screen. An image cast on one side of the holographic screen can be viewed from the other side within an angular range which is much narrower than for a conventional ground glass screen, which provides a brighter, sharper image.

The holographic screen is formed by placing a photographic plate in two interfering beams of coherent light, wherein one of the beams has been passed through a diffusing plate, such as a ground glass screen to provide a diffuse component. The exposed photographic plate is developed and fixed, and contains a recording of an interference pattern, which has the effect of acting as a diffusion screen with highly directional diffraction peaks.

The present invention utilises such a transmissive non-istropic holographic diffusing screen in an optical display device wherein a much larger scale display image can be provided to be viewed on the same side of the screen as the device which casts the image thereon.

According to the invention there is provided an optical display apparatus comprising a screen, a light source for projecting a pattern of light onto the screen from one side thereof, and reflective means on the other side thereof, said screen being substantially transparent but having the property of diffraction as well as the effect of diffusion for light from said source over a given angular range, such that light from the source is diffracted by the screen and then reflected back by the reflective means through the screen which is substantially transparent to the reflected light, so that the reflected light can be perceived as an optical effect from the exterior of the display.

The apparatus according to the invention has the advantage that the optical effect can be viewed on the same side of the screen as the light source, which renders the apparatus compact and suitable for use in advertising displays wherein the screen is mounted on a surface such as a wall.

The pattern of light cast by the light source onto the screen can take many different forms. It can be a free-form pattern of coloured light, which may be spatially varied with time, projected onto a large screen covering a major portion of a wall of a room for decorative purposes. Alternatively, for an advertising display, the pattern of light may define an image of an advertising message. Thus the light source may comprise an optical projector which projects the image of a message on an optical film onto the screen. The optical film may be arranged as an endless belt to display a continuous moving advertising message.

The diffusing screen has the advantage that because it is substantially transparent to the reflected light the diffusion and diffraction of the light by the screen is not repeated upon reflection by the reflective means, with the result that the sharpness and intensity of the viewed optical effect is not degraded by the reflection, as would occur, for example with a ground glass screen and a reflector.

The screen may in addition include a conventional reflection hologram to be superimposed on the optical effect produced by the light from the light source.

Also, the reflective means may have optical information thereon e.g. writing, which can be viewed in the optical effect as a result of being illuminated by light from the source.

The optical display apparatus according to the invention can be used with advantage to simulate combusting fuel in a flame-effect electric fire.

Conventional means for simulating combusting fuel typically include the following components. A semi-translucent cover in the form of a plastics moulding shaped and decorated to resemble pieces of fuel, a housing on which the cover is mounted, a red or orange tinted electric light bulb within the housing an a light circular, multi-blade fan centrally mounted on a pivot pin above the bulb. The fan rotates due to thermal convection currents generated by the heat of the bulb and this provides a flickering effect which simulates, in a crude way, a glowing coal or log fire. However, such conventional means have at least the following disadvantages. The simulation of burning fuel is not really convincing. Dirt and dust can build up on the cover, e.g., due to local convection currents, and this considerably diminishes any realism. The plastics cover can also be seen to be a very poor imitation of simulated burning fuel when the appliance is switched off and it is incongruous in warmer whether when the fire is not required.

GB Patent No. 2 180 927 describes heating apparatus comprising means for providing an improved "fire effect" and this apparatus largely counteracts such problems. The apparatus comprises means for providing a thermal output, means for simulating fuel, a light source for illuminating the simulated fuel and first and second reflective means arranged to provide front-to-back multiple images of the simulated fuel. The first reflective means is capable of transmitting light as well as reflecting light and the means for simulating fuel is provided between the first and second reflective means. The reflective means are arranged so that the multiple images can be perceived as a visible effect from the exterior of the heating apparatus. This arrangement has several advantages. For example, it creates a king of "tunnel" imaging effect giving the impression of a deep or extensive fuel bed and this is particularly useful in creating more realism in "slim-line" designs of electrical heaters. The first reflective means, which is part reflective and part transmissive, also protects the means for producing the "fire effect" and thereby prevents the ingress of dirt and dust. Moreover, the means for simulating fuel is less noticeable when the light source is switched off and it is substantially obscured when a cover plate is used which is made of, for example, a tinted transparent material such as "smoked glass". The visual effect of burning fuel is therefore not seen when it is not required.

Despite the advantages of the latter arrangement, even more realism is desirable, particularly where this can be achieved without imposing too many constraints on the design or cost of the heating apparatus.

GB 2 151 772 discloses a flame effect display which includes a hologram which, when illuminated, provides a holographic image of flames, means also being provided for varying the illumination of the hologram to create an effect of flame movement.

Whilst a holographic display may create a more realistic flame display, it has several drawbacks. For example, some holograms are of the kind which, when illuminated by ordinary light, suffer from image cut-off when viewed at certain angles. This can create a severe design problem, when considering how a user of a heating appliance may "see" the holographic display. For example, the holographic display may be installed at the back of, and within a ground level electric fire and it may be diffcult, or impossible for an observer, who is standing, or sitting close to the fire, or positioned at a certain angle to see the holographic display. Moreover, the holographic flames may not be seen as a convincing part of the simulated burning fuel but rather as a separate display. The fact that the holographic display is an image of a model of flames also detracts from realism.

Some other holograms are of a kind which are illuminated by coherent light and these could provide other visible results. However, their use in a domestic electric fire would be impractical for reasons of cost and complexity.

GB 2 151 772 also mentions the use of switched lamps and colour filters for varying the illumination of the hologram. This would clearly add to the complexity and cost of the installation, as well as increasing the risk of malfunction.

Other earlier prior art attempt to produce more realism (which do not use holograms) have employed translucent screens onto which light is cast in the manner of back-lit image projection. Examples of this are to be found in GB 1 457 540 and 1 024 047 and 295 110. In GB 1 457 450, a bulb (8) and means for simulating fuel are situated behind a translucent screen (2). Light from the bulb (8) illuminates a clear plastics sheet (11) on which dark areas, simulating lumps of coal, are painted; a reflector (5) provides back lighting. This arrangement casts lit areas and shadows onto the rear of the screen. In GB 1 024 047, a translucent screen (5), made by abrading a clear plastics sheet with a multiplicity of closely-adjacent thin horizontal lines, is positioned part way over a sheet of plastics (7) which is shaped to resemble fuel; an inclined reflector (6) is positioned behind the screen. In this arrangement, some of the light from a bulb (3) is reflected onto the back of the screen - as in the previous arrangement - and the remainder passes directly through the simulated fuel. The opacity of the screen is reduced in places, but this is only to make the simulated fuel visible behind the screen. In both GB 1 457 540 and 1 024 047 the translucent screens obscure light and hence severely limit any realism of the "fire effect".

In GB 295 110, a sharply inclined and curved reflector (11) is positioned at the rear of simulated fuel bed (13) and one or more part transparent/part translucent sheets (15, 16, 17) are spaced apart on the fuel bed. This reference teaches only the production of such sheets by darkening a portion of a glass sheet in a suitable way, for instance by a chemical process or smoking. This arrangement appears to depend on light being transmitted directly through the transparent areas to simulate flames and light illuminating the rear of the darkened portions to simulate smoke. It therefore produces only a crude "fire effect" and the sharp inclination of the reflector severely limits the viewing angle of reflected light by an observer.

One aspect of the present invention seeks to overcome these problems and to provide and enhance "decorative or fire effect" whilst avoiding complexity and/or high manufacturing costs. A particular problem to be solved is to produce an optical component which is substantially transparent, whereby light from a rear reflector can be seen as clearly as possible, and which at the same time deflects incident light in such a way as to optimise a viewer's field of view.

Thus, in accordance with the invention, the light source may produce a pattern of light which simulates flames, directed onto the screen, such that the optical effect for the viewer is a facsimile of combusting fuel.

Such a display can be used in heating apparatus or apparatus for simulating a fire effect, either of which include means for simulating fuel whereby a simulated fire effect can be perceived as a simulated combustion effect from the exterior of the heating apparatus.

Suitably, the light source creates moving beams of light so that the angle of incidence of the light falling on the diffuse diffractive means is caused to vary and to pass through the predetermined angular range. This movement creates a flickering effect, simulating flames, thereby adding to realism.

Preferably, the screen comprises a transparent sheet, such as a film or plate, having a high resolution photographic emulsion thereon. Film used for producing holograms is suitable (although the screen should not be regarded as a conventional hologram since it does not reproduce an image of a subject, e.g. such as a model of a flame).

The screen may be manufacture by providing a transparent substrate on which there is a photographic emulsion having a sufficiently high resolution to reproduce an interference pattern which has the property of diffracting light; exposing said substrate to interfering beams of coherent light which produce said pattern, the intensity of one of said beams varying in amplitude in a direction transverse to the plane of a substrate and a second one of said beams having at least a diffuse component; and processing the exposed substrate to provide said pattern.

In a preferred embodiment, where the screen is produced for use in the heating apparatus or fire effect displace mentioned above, the beams are modified in order to enhance the flame effect. For example, the apparatus may comprise a plurality of moving light sources, such a a plurality of bulbs each provided with a pivotally mounted spinner having a plurality of radial reflective vanes. The spinners rotate, due to the thermal air currents produced by the bulbs, and thereby intercept the source light. This produces moving beams of light that can be intercepted and scattered by the means for simulating fuel, e.g., lumps of tinted glass. Various beams of scattered light will then sweep across thr front of the diffracting means over a wide range of incident angles, including the narrower range which is intended to be diffracted.

With such an arrangement in mind, but not limited by reference thereto, the above method of producing the screen may include the steps of varying the intensity of the first beam in a manner consistent with the positions of the light sources, e.g. the amplitude is caused to vary so that peaks occur at these positions. The amplitudes of the peaks may be adjusted together or independently to vary the height of the "flames" and in some cases also to produce a hazy "smoke" effect. The intensity of a component of the second beam may be similarly varied to enhance the "flame effect" and such a beam further includes a diffuse component. The angle of incidence of the beams on the substrate may also be varied, or predetermined to control the brightness of the "flame effect". The angle of the second beam may be further varied or predetermined to control the vertical viewing position of the "flame effect" (i.e. by changing the angle of diffraction).

An incident ray of light diffracted by the screen leaves the latter within a certain solid cone thereby simulating a diffusion effect. When considering a multiplicity of such incident rays, the emergent light will be in the form of a multiplicity of adjacent overlapping solid cones and this supplements the diffusion effect. For optimum brightness, the angle of incidence between the first beam and the substrate (when making the screen) and the angle of the emergent cone of light made with a normal to the substrate (when the screen is in use) are made approximately the same. However, the angle of incident of the first beam (when making) may be substantially the same as the angle of incidence of the light to be diffracted (when using) for maximum brightness. More particularly, these incident angles may be in a range from about $15°$ to the Brewster angle and preferably around $20°$.

Whilst the screen is preferably used together with reflective means to provide a simulated "flame effect", the reflective means is not required where light need only be diffracted. For example, the screen (in the form of a film or sheet) could be positioned at the front of a fire in order to view diffracted light directly. However, this is not normally preferred because the "flame effect" would not then appear to hover over the simulated fuel. In the preferred case, the screen is situated closely adjacent or in contact with the surface of the reflective means for providing diffracted and reflected "flame" images at a region which appears to lie between the actual simulated fuel and its reflected image. Thus, an impression is created of a moving flame in the middle of an extensive fuel bed. (Since the screen is substantially transparent, it does not obstruct the perception of an image of the simulated fuel in the reflective means which is why the observer has the impression of an extensive fuel bed). Moreover, when the screen is situated behind the simulated fuel and close to the reflective means, there are no confusing reflections of stray or background light. This would be the case, for example, in the arrangement shown in GB 295 110 where intermediate glass sheets are positioned on top of the simulated fuel at widely spaced points between the front sheet and the rear reflector.

The screen may be coated to reduce or eliminate specular reflection.

In heating apparatus according to an embodiment of the invention, the reflective means is a reflective sheet positioned in a substantially vertical plane at the rear of the heating apparatus, the screen is situated closely adjacent or in contact with the reflected sheet, means for simulating fuel is located in front of the lower edge of this sheet, and means for producing moving beams of light is located beneath the simulated fuel. With this arrangement, surprisingly effective flame effect is generated when the screen is simply placed immediately in front of the rear reflective sheet.

If a transparent sheet having the property of diffraction and the effect of diffusion is produced by treating one of its major surfaces, the treated surface may face either outwardly, or inwardly from the rear reflector.

Whilst a rear reflective sheet may provide support to hold the screen in place, the latter is preferably caused to adhere to the former. This makes assembly very easy; for example, screens may be produced in the form of self-adhesive sheets. Moreover, by using such sheets, a heating appliance of the kind described in GB Patent No. 2 180 927 can be quickly converted into one having a flame effect. Different and/or replacement sheets could also be made available to the user, e.g., for changing the effect by using sheets with different patterns and/or colours, or for simply replacing an original sheet.

Other advantageous optical effects may be created by including additional reflective means to enable front-to-back multiple images e.g. of the simulated fuel to be perceived in the optical effect. Such an effect is described in more detail in our GB Patent 2 180 927 and it will be understood that the various features of the heating apparatus disclosed therein may be used either singly, or in any combination, to enhance the visual effects created by this invention.

Embodiments of the invention will now be described by way of example with reference to the accompanying schematic drawings, in which:

Figure 1 is a schematic sectional view of an optical display apparatus according to the invention which may be used as an advertising display;

Figure 2 is an enlarged view of a portion of Figure 1 showing the function of the screen and reflective means;

Figure 3 illustrates apparatus for forming the screen;

Figure 4 is a perspective view of an electrical radiant/convector heater which incorporates means for providing a "fire effect";

Figure 5 is a side elevation, partly in section and on a larger scale, of the heater shown in Figure 1; and

Figure 6 schematically illustrates different optical paths which facilitate an understanding of the principle involved in the preferred embodiment.

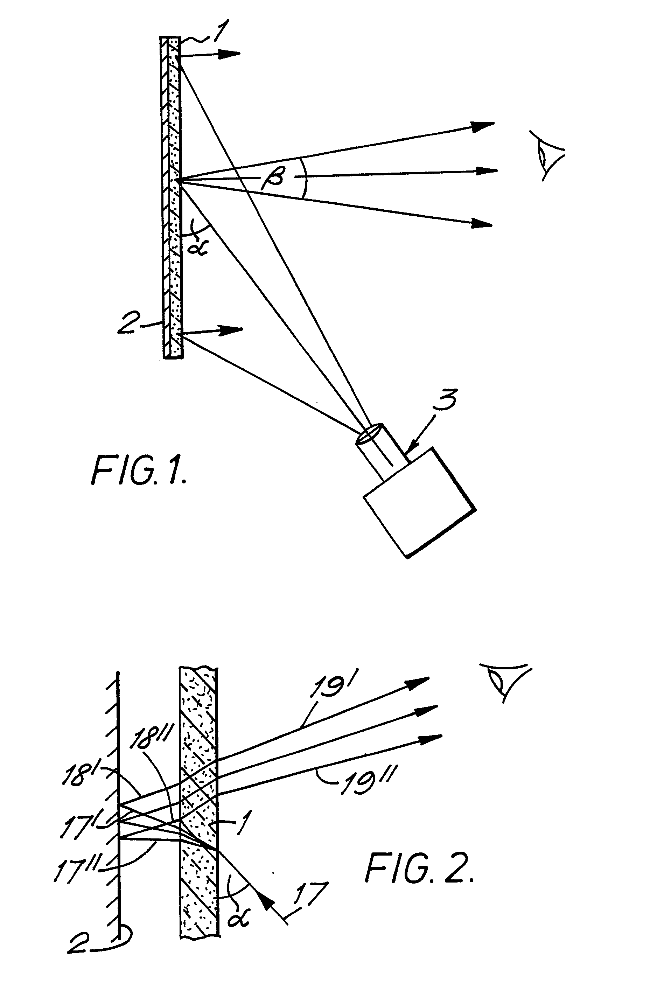

Referring firstly to Figure 1, an example of an optical display device is shown schematically. A non-isotropic holographic diffusing screen 1 is provided with a reflective layer 2. A pattern of illumination light is directed from a light source 3 in the form of a projector, onto the screen 1 at a predetermined angle ($\alpha$) thereto. As will be explained in more detail hereinafter, the arrangement of the screen 1 and reflector 2 forms a real image of the light pattern from the projector which is observable within an angular range ($\beta$).

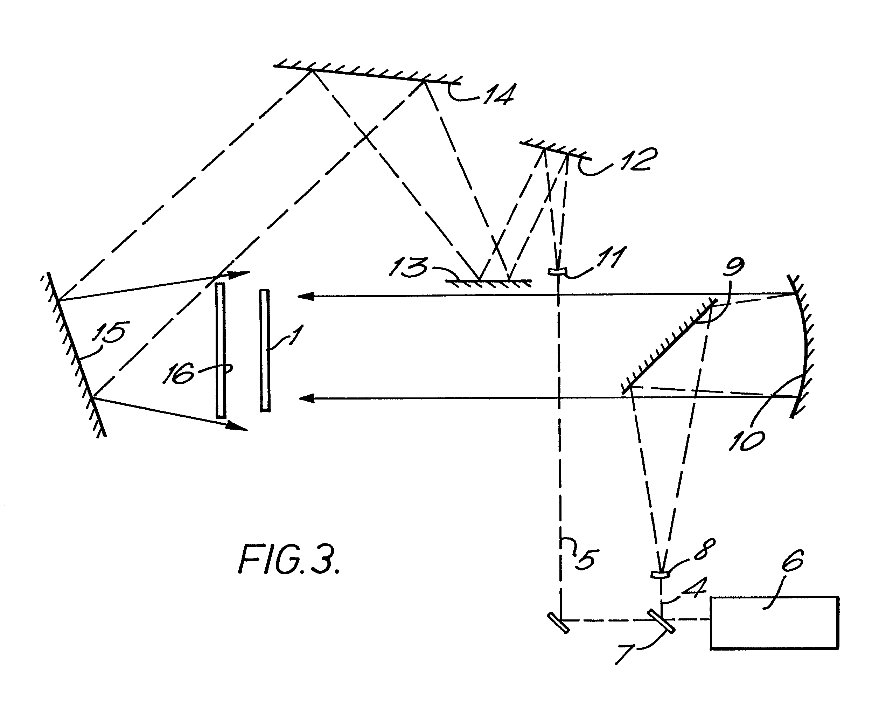

An arrangement for producing the screen 1 is shown in Figure 3. A sheet of high resolution photographic film that is to form the screen 1, is placed in the path of two interfering beams 4, 5 of coherent light from a laser 6, produced by a semi-reflective beam splitter 7. The beam 4 is spread by a lens 8 and passes via a plane mirror 9 and concave mirror 10, to one side of the unexposed photographic film 1.

The beam 5 is spread by a lens 11 and passes via plane mirrors 12, 13, 14, 15 to the other side of the film 1, after passing through a diffusing plate 16, typically a ground glass screen, such that the beam is imparted with a diffuse component.

The beams 4, 5 thus interefere in the region of the photographic film 1, and the resulting interference pattern is recorded in the film, which is then developed and fixed . The resulting screen 1 thus contains a holographic record of the diffusing effect produced by the ground glass screen 16.

When an image is cast onto the resulting screen 1, from one side the screen has the property of displaying the image to a viewer on the other side within a particular, narrow range of viewing angles, and appears transparent at other viewing angles. This non-isotropic viewing characteristic contrasts with a conventional ground glass screen which displays an image cast thereon over a much wider range of viewing angles.

Referring now to Figure 2, this shows on an enlarged scale the non-isotropic screen 1 in use in the apparatus shown in Figure 1. A light ray 17 from the projector 3 (Figure 1) is incident at a predetermined angle $\alpha$ on the screen 1 and is diffracted and diffused within the screen. It will be appreciated that the ray 17 represents the direction of travel of part of a wavefront of finite width and the effect of the intereference pattern recorded within the screen 1 is to act on the wavefront to produce diffraction and diffusion thereof. The diffraction is non-isotropic and as a result the pattern of light cast on the screen by the projector 3 at angle $\alpha$ is formed in transmission through the screen 1 within a narrow angular range, the limits of which are shown schematically by the rays $17'$ and $17''$.

The transmitted light pattern (as exemplified by ray $17'$; $17''$) is reflected by the reflective surface 2 to form divergent rays $18'$, $18''$ which pass back into the screen 1. Since the angle of incidence does not correspond to the predetermined diffraction angle $\alpha$, the screen 1 appears transparent to the rays $18''$, $18''$, so that the light passes through the screen without substantial diffusion, although the light does suffer a lateral shift due to the difference in refractive index between the screen 1 and air, in a manner analogous to a light beam passing through a glass plate. The resulting rays $19'$, $19''$ thus illustrate the angular range of view for the optical effect produced by the pattern of light from the projector 3; for other angles of view the screen 1 appears transparent.

The displayed optical effect is of high intensity compared to a situation where a ground glass screen were used instead of the screen 1 or a white diffuse surface were used.

As a result, the apparatus according to the invention can be used to produce display in ambient light conditions for decorative or advertising purposes.

In Figure 2, the reflective layer 2 is shown spaced from the screen 1 whereas in practice, it may be laminated to the screen. Typically the screen 1 comprises a sheet of photographic film which has the reflective layer 2 affixed thereto.

It will be appreciated that the arrangement can be used over large areas for display purposes e.g. over the major portion of a wall in order to provide a display screen for advertising purposes. The display could be formed of a plurality of contiguous panels, with their viewing angles arranged in different directions to provide an interesting display effect viewable from a different angles.

Also, the screen need not necessarily be a conventional halide photographic film but could comprise a photosensitive layer that is developable and fixable by other techniques. Furthermore, the holographic pattern in the screen 1 may be formable by physical embossing or other techniques.

The reflective layer 2 can be formed in many different ways. It can comprise a conventional mirror laminated onto the screen 1, or can comprise a polished metal surface, or a flexible reflector in sheet form or a vapour deposited metallic layer.

The pattern of light from the projector 3 may take many different forms. If may comprise an advertising message. The message may be recorded on an optical film, which is continuously movable to display a continuously repeating message on the screen 1. Many other forms of display will be apparent to those skilled in the art. The pattern of light could also be a free-form pattern of colours in order to provide an abstract decorative display.

Also, to enhance the display, a conventional reflection hologram could be laminated onto the screen 1 so that the advertising message is superimposed onto a three dimensional image.

Furthermore, the display can be enhanced by photographically recording more than one diffusing screen pattern in the photographic film, at different angles so as to provide more than one viewing angle for the screen. Thus, referring to Figure 3, multiple exposures of the plate 16 onto the film 2 would be formed, for each of which the angle of the plate 16 relative to the film would be changed. Thus, when the resulting screen is formed, it would exhibit diffraction peaks at a number of different viewing angles thus enhancing the display.

The display apparatus has particular application to producing a flame effect which can be used in an electric heater. In this case, the optical pattern projected onto the screen 1 is selected to simulate moving flames in a fire, as will now be explained in detail with reference to Figures 3 to 6.

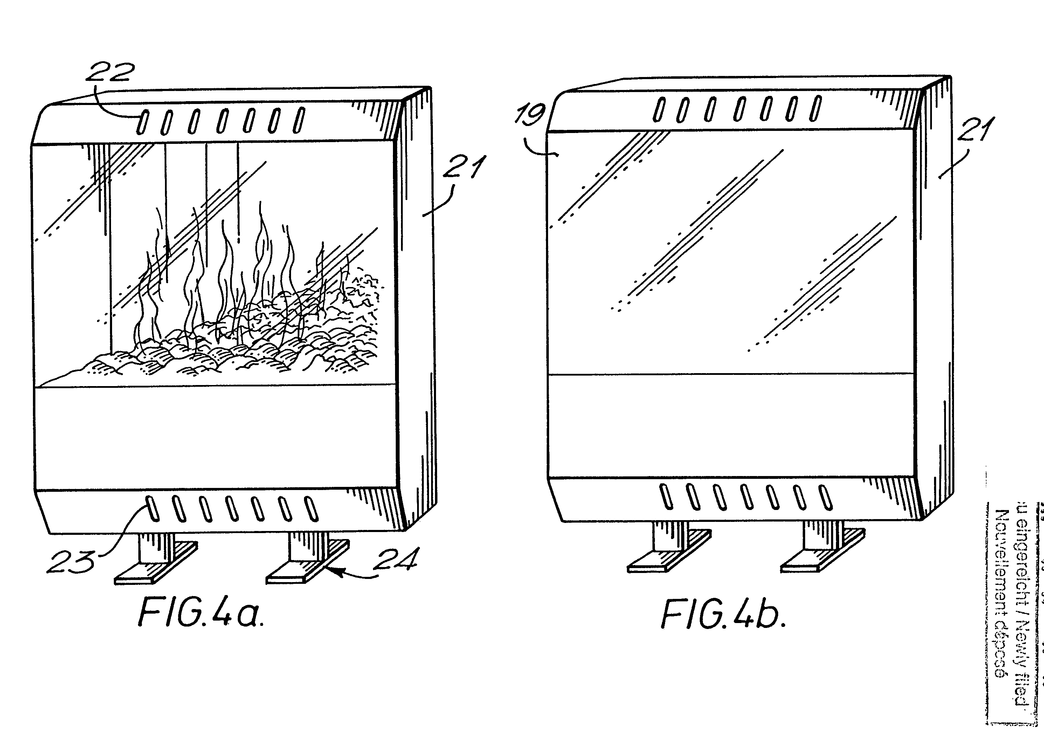

The heater includes an outer casing 21 having ventilation holes 22, 23 and standing on legs 24. Figure 4 schematically illustrates a convector element 25 located in an upper chamber 26 of casing 21. Similarly, a fan heater 27 is located in a lower chamber 28. A chamber 29 contains a tinted bulb 30 and a thermally driven, circular fan or spinner 31. Only one bulb and fan are shown for ease of illustration but (e.g.) two, three or four may be used depending on the width of the heater and the effect required. The circular fan 31 is centrally pivoted (by means not shown, but of known construction) so that it rotates due to the thermal currents of air produced by the bulb 30 when illuminated. The bulb 30 is preferably tinted red or orange whereby beams of tinted light, intercepted by the blades of the fan 31, are directed upwardly towards a transparent, or translucent sheet 32. Sheet 32 supports pieces of tinted glass 33 having irregular shapes and intended to resemble glowing pieces of coal. (Other arrangements are possible, e.g. where ordinary bulbs are used and sheet 32 is tinted) Sheet 32 preferably has an uneven surface, e.g., it may be a sheet of 'patterned glass'. In alternative arrangement (not shown), the sheet 32 and the simulated pieces of fuel 33 are made as an integral structure, e.g., in the form of a moulded sheet which simulates a bed of fuel and which is at least partially light-transmissive. The front, rear and sides of the chamber 29 are formed by part of the casing 21 which thereby obscure light from bulb 30. The floor 34 of chamber 29 may be either opaque , or it may transmit some light downwardly into chamber 28 whereby a red or orange glow can be seen through the ventilation holes 23.

A chamber 35, which is largely empty except for the pieces of glass 33, is situated between chambers 26 and 29. A sheet 36 of polished or plated metal, such as aluminium, is located at the rear of chamber 35 in order to reflect light towards a sheet 37 which is at least transparent and preferably partly transparent and partly reflective. Sheet 37 is preferably made of heat-resistant glass with a partially-reflective coating 38 on its inner major surface. Sheets 36 and 37 are substantially parallel whereby multiple images of the simulated fuel 33 may be observed from the exterior of the heater through a transparent cover plate 39. Where multiple images are not required, sheet 37 may be omitted so that the observer will then see only one image of the simulated fuel 33 (in reflector 36). The cover plate 39 is preferably made of heat-resistant, tinted plastics material which resembles so-called "smoked glass". For example, sheet 39 may be tinted grey or brown or other colours so that it appears to be transparent when chamber 35 is illuminated with light from bulb 30 (see Figure 3a), and so that it appears to be opaque when bulb 30 is off (see Figure 3b). The sheet 39 is spaced from sheet 37 by means of a frame 40. The front surface of sheet 39 is preferably flush with the front surfaces of casing 21 so as to provide a pleasing smooth finish to the front of the heater, especially when chamber 35 is not illuminated (see Figure 3b). The sheet 39 may be just transparent, i.e. not tinted, where the latter effect is not considered to be important.

A diffracting screen 41 (corresponding to the screen 1 of Figure 1) is situated close to, and preferably in contact with the rear reflector 36. Suitably, the screen 41 is a self-adhesive sheet and is thereby attached to reflector 36.

The floor of chamber 26 may be opaque, or it may transmit some light which can be perceived, as a tinted glow, through ventillation holes 22.

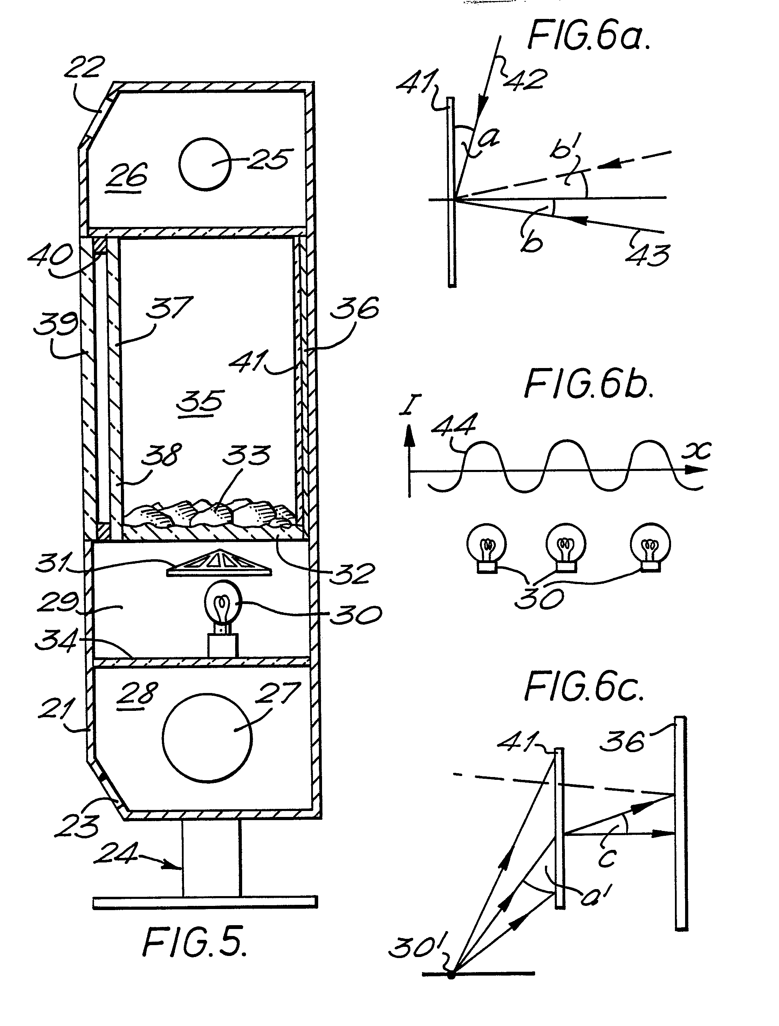

When the light bulb 30 is switched on, thermal currents of air cause the fan 31 to rotate. Beams of tinted light, intercepted by the blades of fan 31, thereby pass upwardly through sheet 32 and through and/or between the simulated pieces of fuel 33 into chamber 35. These beams of light are incident on the front face of sheet 41 and beams of light within a certain solid cone of incident angles are diffracted, the diffracted light passing through sheet 41 and being incident on reflector 16. The diffracted light emerges within a solid cone (as explained with reference to Figure 5c) and this provides the effect of diffusing the diffracted light. This light is then reflected by sheet 36 back through the diffracting sheet 41 and out through sheets 37 and 39. Since the angle of incidence of the reflected light on the diffracting sheet is not within the angular range of light which would be diffracted, the diffracting sheet 41 appears to be transparent to the reflected light which thereby passes straight through and is perceived through the front cover plate 39 as a flame effect, i.e. the light simulates flickering flames. The realism of the effect is remarkable in view of placing just one sheet 41 at the back of the chamber 35 in contact with reflector 36. Moreover, since sheet 41 is between the simulated fuel and its reflection (in reflector 36), the simulated flames appear to emanate from the middle of an extensive fueld bed, thereby adding to the realism. This effect is multiplied when the part transparent and part reflective sheet 37 is used to produce multiple images. In this case, the eye-level of an observer standing in front of the heater is normally above the centre of sheets 38, 39 whereby a series of multiple images of the simulated fuel 33 are perceived through the cover plate 39. These multiple images are schematically illustrated in Figure 3a and give the appearance of an even more extensive fuel bed stretching back far beyond the rear panel of the heater. This heightens the attractiveness and effect of a glowing fuel bed, especially where the heater is of the contemporary "slim-line" design.

As the chamber 35 can be totally enclosed, this prevents the build up of dirt and dust which would otherwise detract from the "fire effect". However, there may be applications where no front cover plate or plates are used (i.e. both plates 37 and 39 being omitted).

The bulb 30, which may be one of a plurality each located adjacent a respective fan 31, can be connected in series with a dimming switch (of known construction) for adjusting the level of illumination of chamber 35 to an optimum value. Alternatively, a plurality of bulbs may be selectively switched on or off to achieve the same purpose. This is useful where the level of illumination of the "fire effect" may need to be adjusted to suit different levels of illumination of a room in which the heating apparatus is installed. The positions of bulbs 30 may also be adjustable, if not predetermined, so that an optimum diffraction effect is achieved.

Reflectors may also be provided at the sides of the fuel bed to enhance the effect of a broad extent of burning fuel.

Referring to Figure 6, sheet 41 is a high resolution photographic film which is exposed to two beams of light 42, 43 which are mutually coherent and which optically interfere on the surface of the sheet. Only ray paths are shown in the drawing since the beams would normally extend over the incident surface. The beams thus correspond to beams 4, 5 of Figure 3 but in this embodiment both are incident on the same side of the sheet 41. The intensity 44 of beam 42 is caused to vary in direction x across the width of the sheet 41, i.e. in a direction which corresponds parallel to the positions of bulbs 30, as shown diagrammatically in Figure 6b. The degree of 'amplitude modulation' can be varied to vary the height or size of the 'flames'. The intensity of beam 43 can be similarly varied to enhance the latter effect. Beam 43 further includes a diffuse component and is thus a composite beam including a 'modulated' component and a diffuse component. Beam 42 makes an angle a with the surface of sheet 41 and beam 43 makes an angle b with a normal to this surface., Instead of being on the far side of the normal (as shown in Figure 5a), beam 43 may be on the nearside of the normal (i.e. making an angle b$'$) to improve the viewing angle. Angle b can be varied to change the vertical viewing position of the flame effect. For optimum brightness, angle a should be close to angle c (see Figure 6c and the explanation below) but we have found that maximum brightness can be achieved where angle a is substantially equal to angle a$'$, e.g. over a range of from about 15° to the Brewster angle and preferably around 20°.

Following exposure to beams 42, 43 sheet 41 is processed in accordance with standard photographic techniques but is subjected to bleaching after immersion in a developer and a subsequent stop bath. This assists in maintaining transparency without substantial loss of the recorded pattern that provides the diffraction and the effect of diffusion. The recorded pattern can be fixed if necessary (since the bleach acts as a fixer) and then dried. An anti-reflection coating may be used, e.g. sprayed onto the dried sheet to reduce or eliminate specular reflection which could otherwise cause feint confusing images to be seen. However, this is a refinement since most of the unwanted light passes through sheet 41, without being diffracted and is lost within the casing due to the angles at which it reflected by rear reflector 36.

Figure 6c schematically illustrates sheet 41 in an operative position where light from source 30$'$ illuminates the front surface of sheet 41 and is diffracted, as shown by the path of the middle ray, through the sheet. With the source 30$'$ shown as a single point with a mean angle of incidence a$'$ - (angle a may be equal to or much greater than angle a$'$), the diffracted light passing through sheet 41 emerges over a solid angle c made to a normal to the surface of sheet 41. This light passes to the rear reflector 36 where it is reflected back through sheet 41 and out through sheets 37 and 39 to the observer. Since the light is 'bent' by diffraction, this improves the observer's field of view, i.e. compared with the prior art arrangements mentioned above. Moreover, the angle of diffraction can be selected with the desired effect in mind, for example, a field of view stretching from just above floor level to an average hight of eye of a standing or seated person.

Since the cone c represents the emergent light from one incident ray, it can be seen that a multiplicity of adjacent cones c representing emergent light from a multiplicity of incident rays would overlap one another. This supplements the effect of diffusion.

In practice, the light incident on sheet 41 is composed of many beams of light and only those beams within a certain controlled cone of incident angles are diffracted and then reflected out of the heater. This is an advantageous effect in that is substantially reduces undesirable stray light that would otherwise be perceived from the exterior of the heater as confusing reflections.

Repositioning the bulbs 30, modifying the angle of the vanes of the fans 31 and/or modifying the simulated fuel (32, 33) through which the light passes en route to sheet 41 will change the effect. Certain interference patterns may be used to cause selective diffraction to produce coloured effects and this may be enhanced by the use of white and/or coloured light (e.g. produced with the aid of filters).

In the described examples of the fire, the element 41 is shown to be planar. However, its left and right side edges could be inclined rearwardly so as to increase the viewing angle of the fame effect from the front of the fire.

Since the diffusing means can be advantageously used to provide bright images, the cover plate 39, i.e. which is preferably made of tinted transparent material, can be darker in order to obscure the means for simulating the fire effect when the heater is not used to produce a thermal output (e.g. during the summer).

## Claims

1. Optical display apparatus comprising a screen, a light source for projecting a pattern of light onto the screen from one side thereof, and reflective means on the other side thereof, said screen being substantially transparent but having the property of diffraction as well as the effect of diffusion for light from said source over a given angular range, such that light from the source is diffracted by the screen and then reflected back by the reflective means through the screen which is substantially transparent to the reflected light, so that the reflected light can be perceived as an optical effect from the exterior of the display.

2. Apparatus according to claim 1 wherein said reflective means is attached to the screen.

3. Apparatus according to claim 1 or 2 wherein the screen is in sheet form.

4. Apparatus according to claim 1 or 2 wherein the screen includes a sheet of photographic film.

5. Apparatus according to any preceding claim wherein the light source is operative to project a pattern of light that comprises an advertising message.

6. Apparatus according to any one of claims 1 to 4 wherein said pattern of light produces a decorative display as said optical effect.

7. Apparatus according to any one of claims 1 to 4 wherein said light source is operative to project a pattern of light that produces a flame effect as said optical effect.

8. Apparatus according to claim 7 including means for simulating combusting fuel to be perceived in combination with said flame effect.

9. Apparatus according to claim 7 or 8 wherein the light source comprises one or more electric bulbs provided with a fan which is driven by thermal convection currents and thereby intercepts light from the bulb, the position of said bulb or bulbs with respect to the screen being such as to provide moving beams of light which pass through a range of incident angles with respect to the screen.

10. Apparatus according to claim 8 or 9 wherein said reflective means comprises a reflective sheet positioned in a substantially vertical plane at the rear of the apparatus, said diffusing means is situated closely adjacent or in contact with said reflective sheet, said means for simulating fuel being located in front of a lower edge of the latter sheet and said light source being located beneath the simulated fuel.

11. Apparatus according to any preceding claim including additional reflective means to enable multiple images of said optical effect to be perceived from the exterior of the apparatus.

12. A method of producing the screen of an optical display apparatus according to any preceding claim including: exposing a photographic film to interfacing beams of coherent light which produce an intereference pattern, the intensity of at least one of said beams varying in amplitude in a direction transverse to the plane of the film and a second one of said beams having at least a diffuse component; and processing the exposed film.

13. A method according to claim 12 wherein the intensity of said beam or beams is varied spatially in a manner consistent with the positions of the light source which is used subsequently to illuminate the screen.

14. A method according to claim 12 or 13 wherein the intensity of said beam or beams is varied in order to adjust the amount of light to be diffracted by said diffraction pattern.

15. A method according to any one of claims 12, 13 or 14 wherein the angle of incidence of said beam or beams is varied in order to adjust the angle of diffraction of said pattern.

16. A method according to claim 15 wherein the angle of incidence of said first beam with the surface of the photographic film is selected with regard to the angle subtended by diffracted light emerging from the screen, or to the angle of incident light on the screen when illuminated with incident light in use, in order to provide maximum brightness.

17. A flame-effect electric fire comprising means for simulating combusting fuel; a non-isotropic diffusing screen, and a light source for projecting a pattern of light onto the screen such that within a particular angle of view, there is produced a flame-like optical effect observable concurrently with the simulated combusting fuel.

FIG. 1.

FIG. 2.

FIG.3.

EP 0 348 137 A2

FIG.4a.

FIG.4b.

EP 0 348 137 A2

**FIG.6a.**

**FIG.6b.**

**FIG.6c.**

**FIG.5.**